Europäisches Patentamt

European Patent Office

Office européen des brevets

(11) Veröffentlichungsnummer: **0 179 329**
**B1**

(12) # EUROPÄISCHE PATENTSCHRIFT

(45) Veröffentlichungstag der Patentschrifft:
28.02.90

(21) Anmeldenummer: 85112558.3

(22) Anmeldetag: 04.10.85

(51) Int. Cl. ⁵: **G 01 L 1/26, B 66 C 13/04**

(54) Vorrichtung für Hebeeinrichtungen.

(30) Priorität: 24.10.84 DE 3438985

(43) Veröffentlichungstag der Anmeldung: .
30.04.86 Patentblatt 86/18

(45) Bekanntmachung des Hinweises auf die Patenterteilung:
28.02.90 Patentblatt 90/09

(84) Bennante Vertragsstaaten:
AT CH DE FR GB IT LI NL SE

(56) Entgegenhaltungen:
EP-A-0 003 473
DE-A-3 119 806

(73) Patentinhaber: **Isetron Industrie- und Sicherheits-Elektronik GmbH**
**Gökerstrasse 62**
**D-2940 Wilhelmshaven (DE)**

(72) Erfinder: **Pitter, Andreas**
**Anton-Reiingstrasse 28**
**D-2948 Schortens 4 (DE)**
Erfinder: **Stenkamp, Werner, Prof. Dr.-Ing.**
**Am Tief 10**
**D-2948 Schortens 2 (DE)**

(74) Vertreter: **Weber, Otto Ernst, Dipl.-Phys.**
**Hofbrunnstrasse 36**
**D-8000 München 71 (DE)**

## Beschreibung

Die Erfindung betrifft eine Vorrichtung für Hebeeinrichtungen gemäß Oberbegriff des Anspruches 1.

Eine derartige Vorrichtung ist beispielsweise aus der DE-3 119 806 A1 bekannt. Bei dieser bekannten Vorrichtung ist beispielsweise ein Meßwertaufnehmer direkt in den Kraftflußweg zwischen Tragwerksbauteilen der Hebeeinrichtung und einer von dieser zu bewegenden Last eingebaut. Dieser Meßwertaufnehmer erfaßt die auftretenden Belastungszustände zwar sehr gut. Unter dem Aspekt einer Ausgleichs-oder Adaptionsvorrichtung, wie z. B. einer Dämpfungseinrichtung bei auftretenden Schwingungen, kann er keinerlei Beiträge für den Betrieb der Hebeeinrichtung liefern, da er ein im wesentlichen starr in den Kraftflußweg eingebundenes Element darstellt.

Weiterhin ist aus der EP-3 473 A1 ein Massen- und Kraftmesser bekannt, das einen Lastträger und ein Meßsystem aufweist. Bei diesem Massen- und Kraftmesser ist zwischen dem Lastträger und dem Gestell eine Lastfeder und zwischen dem Lastträger und dem Krafteingang des Meßsystems eine schwächere Meßfeder angeordnet, so daß diese Federn kraftuntersetzende Hebelwerke in Massenmeßgeräte teilweise oder ganz ersetzen. Die Längendehnung der schwächeren Meßfeder dient hierbei zur Ableitung eines Meßsignals für das Meßsystem. Hebeeinrichtungen, wie z. B. Krananlagen, die zum Anheben und Absenken von Lasten und gegebenenfalls zum horizontalen Verfahren und Befördern dieser Lasten dienen, werden durch das Beschleunigen und Verzögern dieser Lastmassen erheblichen Zusatzbelastungen ausgesetzt. Ein wesentlicher und kritischer Belastungszustand entsteht vor allen Dingen beim Anheben oder Losbrechen einer maximalen Last vom Boden mit entsprechender Hubnenngeschwindigkeit. Hierbei treten Belastungszustände auf, die ein Vielfaches der Nennbelastung betragen können. Beim Anheben einer Überlast, wie es bei gewichtsmäßig nicht gekennzeichneten Gütern vorkommen kann, oder beim Blockieren einer mit Hubnenngeschwindigkeit geförderten Nennlast, muß die entsprechende Hebeeinrichtung die einwirkenden Kräfte bzw. die daraus resultierenden Energiewerte der bewegten Lasten aufnehmen können. Um derart kritische Belastungszustände unter Sicherheitsaspekten bewältigen zu können. sind die Hebeeinrichtungen und deren Aggregate in der Regel überdimensioniert. Ein Faktor, der die Überdimensionierung mitbestimmt, ist dabei z. B. der Hublastbeiwert, wie er in DIN 15 018, Blatt 1, definiert ist. Trotzdem können bei vorausgehend erwähnten, kritischen Belastungszuständen die Aggregate und Elemente der Hebeeinrichtung, z. B. die Tragwerksbauteile oder die Drahtseile eines eingesetzten Flaschenzuges, meist nur Bruchteile der bei diesen kritischen Belastungszuständen auftretenden gesamten Bewegungsenergie ohne Beschädigung ausgleichen oder speichern. Dies hat zur Folge, daß die Hebeeinrichtung durch derart kritische Belastungszustände einer starken Abnutzung unterliegt und frühzeitig Ermüdungserscheinungen der Materialien auftreten, wobei auch ein Totalschaden der Hebeeinrichtungen in manchen Fällen nicht auszuschließen ist.

Ausgehend von diesen bekannten Nachteilen bei Hebeeinrichtungen liegt der Erfindung die Aufgabe zugrunde, eine gattungsgemäße Vorrichtung im Sinne einer Adaptionsvorrichtung so zu konzipieren, daß kritische Belastungszustände so rasch wie möglich auf Nennlastzustände zurückgeführt werden können bzw. in der Entstehungsphase bereits erfaßt werden und nach Möglichkeit ausgeglichen werden, wobei die üblicherweise unter Sicherheitsaspekten erforderliche Überdimensionierung der Hebeeinrichtung reduziert und mit kostengünstigeren Auslegungen realisiert werden kann.

Diese Aufgabe wird bei einer gattungsgemäßen Vorrichtung erfindungsgemäß durch die Merkmale des kennzeichnenden Teils des Anspruches 1 gelöst.

Der wesentliche Gedanke der Erfindung ist darin zu sehen, die Vorrichtung so auszulegen, daß bei kritischen Belastungszuständen mindestens eine Zwischenspeicherung der durch diese kritischen Belastungszustände hervorgerufenen mechanischen Energie oder sogar deren teilweise Vernichtung bzw. Umwandlung in andere Energieformen, z. B. in Wärmeenergie, erfolgt. Um diese Belastungszustände nach Möglichkeit bereits in der Entstehungsphase zu erfassen, wird ein Meßwertaufnehmer, wie er z. B. in der DE-3 119 806 A1 beschrieben ist, kraftschlüssig mit der Einrichtung zur Energiezwischenspeicherung oder Umwandlung gekoppelt.

In dieser Verbindung zwischen Meßwertaufnehmer und vorgenannter Einrichtung ist es vorteilhafterweise möglich, zu Beginn des Anhebens einer Nutzlast z. B. die Hubgeschwindigkeit zunächst sehr klein zu halten und erst allmählich auf die Nennhubgeschwindigkeit hochzufahren. Durch die als Federeinrichtung konzipierte Einrichtung zur Zwischenspeicherung bzw. Tilgung von Energie ist im Vergleich zu bekannten Hebeeinrichtungen eine relativ weiche Federung und gute Elastizität vorhanden bzw. einstellbar, so daß z. B. der Hublastbeiwert erheblich reduziert werden kann. Da dieser Hublastbeiwert im Sinne eines Überdimensionierungsfaktors bei der Berechnung der zulässigen Hublasten eingeht, kann eine entsprechende Hebeeinrichtung auch unter Berücksichtigung von auftretenden, kritischen Belastungszuständen kostengünstiger realisiert werden.

Zweckmäßigerweise weist die Federeinrichtung eine resultierende Federkennlinie auf, die in der Gesamtfunktion einen progressiven Verlauf hat. Hierbei kann die resultierende Federkennlinie sowohl aus der Überlagerung zweier oder auch mehrer Federkennlinien ab dem Nullpunkt einer einwirkenden Kraft herrühren.

Die resultierende Federkennlinie kann jedoch auch aus einer zeitlich und federwegsmäßig erfolgenden Wirkungsweise, also im Sinne einer gestuften Betriebsweise, resultieren.

Gerade der progressive Verlauf der gesamten Federkennlinie erlaubt im Bereich der Anfangsbelastung, z. B. beim Anheben oder Losbrechen einer Last vom Boden, eine größere Feinfühligkeit im Hinblick auf eine Energiezwischenspeicherung oder die Erfassung der auch nur geringfügig unterschiedlichen Belastungszustände. Andererseits ist die Vorrichtung durch den progressiven Verlauf ihrer Federkennlinie auch auf kritische Belastungszustände ausgelegt, so daß auch in derartigen Phasen die volle Funktion der Belastungszustandserfassung, der Zwischenspeicherung und Dämpfung der eingeleiteten Energie etc. erhalten bleibt. Aus diesem Grund ist die Federeinrichtung vorteilhafterweise so ausgelegt, daß auch in kritischen Belastungszuständen ein Restfederweg vorhanden bleibt, damit kein "auf Block fahren" der Federeinrichtung auftreten kann.

Vorteilhafterweise besteht die Federeinrichtung aus mindestens zwei teleskopartig ineinander angeordneten Federn.

Zur raschen Erfassung der auftretenden Betriebszustände kann ein Meßwertaufnehmer, z. B. gemäß der DE-3 119 806 A1, der Federeinrichtung vor- oder nachgeschaltet oder anderweitig mit dieser integriert sein. Zweckmäßigerweise wird ein derartiger Meßwertaufnehmer der Federeinrichtung vorgeschaltet, so daß die z. B. durch ein Anheben der Last eingeleiteten Kräfte über das mit der Last verbundene Seil direkt oder indirekt über ein Zwischenglied auf den Meßwertaufnehmer einwirken können. Hierdurch ist sowohl zeitlich, wie auch unverfälscht durch eventuelle Dämpfungsglieder, der augenblickliche Betriebszustand der Hebeeinrichtung erfaßbar.

Bei einer teleskopartigen Auslegung der Federeinrichtung, wie es z. B. bei Wendelfedern durch eine radiale Anordnung der einen Feder in der anderen realisierbar ist, kann die Vorrichtung trotz ihres kompakten Aufbaues einen relativ großen Federweg zum Ausgleich entsprechender Belastungszustände ermöglichen. Abhängig von den Einsatzzwecken und Einsatzbedingungen kann die Vorrichtung auch mehr als zwei Federeinheiten aufweisen. Die Federeinheiten können dabei unterschiedlichen Aufbau oder ein unterschiedliches Funktionsprinzip aufweisen. An die Stelle von Wendelfedern können z. B. Tellerfedern oder Elastomerelemente treten. Auch kann die translatorische und axiale Funktionsweise der Vorrichtung selbstverständlich auch in eine rotative Torsionsfunktionsweise abgeändert werden.

Im vorgenannten Beispiel kann die Vorrichtung selbst an dem dem Seil gegenüberliegenden Gehäuseende fest an Bauteilen des Tragwerks der Hebeeinrichtung angelenkt oder starr damit verbunden werden.

Sofern die Dämpfungscharakteristik der Federeinrichtung für bestimmte Anwendungsbereiche nicht ausreicht, kann des weiteren mit der Federeinrichtung eine Dämpfungseinrichtung verbunden sein. Zweckmäßigerweise würde diese Dämpfungseinrichtung in den Kraftfluß zwischen den einzelnen Federn zwischengeschaltet, so daß bei auftretenden Schwingungen für alle denkbaren Betriebszustände eine optimale Dämpfung erreicht wird.

Da bekannte Hebeeinrichtungen häufig mit mehreren, gegebenenfalls flaschenzugartigen Hebezeugen arbeiten, kann eine Anpassung der entsprechenden Seilenden auf eine Null-Lage erforderlich werden. Für derartige Fälle sieht die Vorrichtung ein Zwischenglied vor, das z. B. einerseits mit dem Meßwertaufnehmer und andererseits mit dem Seilende gekoppelt sein kann. Vorteilhafterweise wird dieses Zwischenglied hülsenartig ausgelegt, so daß durch ein Verdrehen der Hülse eine Verkürzung oder Verlängerung bezüglich eines Seilendpunktes herbeigeführt werden kann.

Ergänzend oder auch alternativ zum Meßwertaufnehmer können Meßfühler, z. B. in Art von Schalterleisten, im Federweg der Federeinrichtung vorgesehen sein, die den Belastungszustand der Vorrichtung und der Hebeeinrichtung in Abhängigkeit vom überbrückten Federweg erfassen lassen.

Die Erfindung wird nachstehend anhand eines schematischen Ausführungsbeispieles noch näher erläutert.

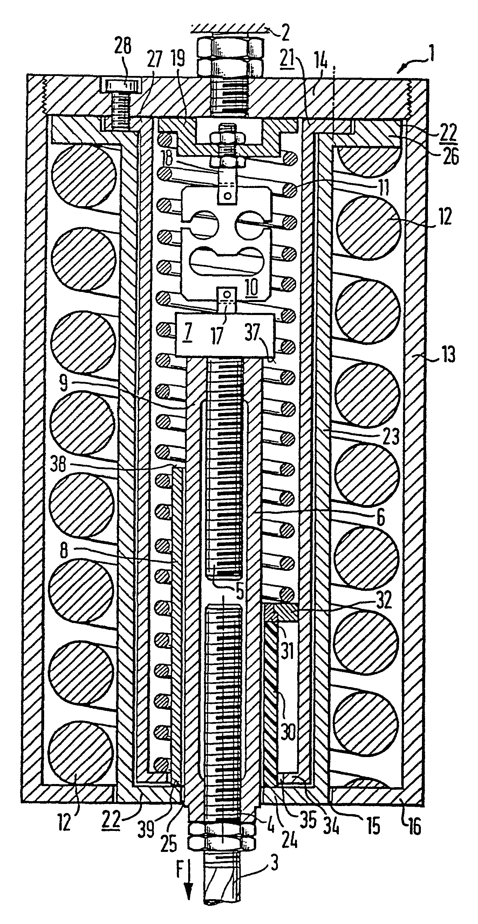

Das Ausführungsbeispiel gemäß der Figur zeigt im axialen Schnitt eine entsprechende Vorrichtung in zwei Varianten, wobei im linken Bereich eine Blockierungseinrichtung für den Federweg einer ersten Feder und im rechten Bereich die Integration einer Dämpfungseinrichtung dargestellt ist.

Die in der Figur im Axialschnitt dargestellte Vorrichtung 1 weist im wesentlichen einen zur Längsmittelachse axialsymmetrischen Aufbau auf. Die Vorrichtung 1 ist dabei z. B. bei 2 an Tragwerksbauteilen der Hebeeinrichtung befestigt. Am gegenüberliegenden unteren Ende ist in der Längsmittelachse das Seilende 3 dargestellt, das mit einer in die Vorrichtung 1 hineinragenden, unteren Gewindestange 4 z. B. starr oder gelenkig verbunden ist.

Von radial außen nach innen gesehen weist die Vorrichtung 1 ein in etwa becherförmig aufgebautes Gehäuse 13 auf. Im Beispiel kann dieses Gehäuse 13 in Richtung zur Hebeeinrichtung 2 mit einem Abschlußdeckel 14 kraft- und formschlüssig abgeschlossen sein. Im Bereich des Seilendes 3 hat das Gehäuse 13 einen Gehäuseboden 16, der nach radial innen z. B. eine kreisförmige Öffnung 15 aufweist. Auf der Innenfläche des kreisringförmigen Gehäusebodens 16 ist im Beispiel eine Wendelfeder als zweite Feder 12 abgestützt.

Nach radial innen schließt sich an diese zweite Feder 12 mit geringem radialem Spiel ein Rohrelement 22 (zweites Rohrelement) an, das mit einem nach radial außen auskragenden Rohrflansch 26 deckelseitig in Kraftverbindung mit der zweiten Feder 12 steht. Die radialen Abmessungen des zweiten Rohrelementes 22 am Rohrflansch 26 bzw. an seinem Rohrboden 24 sind so getroffen, daß eine relative Axialverschiebung des Rohrelementes 22 im Gehäuse 13 möglich ist, wobei dann der untere Teil des Rohrelementes 22 durch die Öffnung 15 des Gehäuses 13 teleskopartig hervorsteht.

Innerhalb dieses im wesentlichen U-förmigen Rohrelementes 22 ist ein weiteres, erstes Rohrelement 21 angeordnet, das eine etwa analoge Konfiguration wie das Rohrelement 22, jedoch mit radial kleinerer Abmessung aufweist. Dieses innere, erste Rohrelement 21 ist mit einem oberen, radial nach außen auskragenden Rohrflansch, z. B. mittels Schrauben 28, fest mit dem Abschlußdeckel 14 verbunden. Der Rohrflansch 27 des ersten Rohrelementes 21 liegt in einer kreisförmigen Ausnehmung des Rohrflansches 26, so daß ein bündiges Anliegen der beiden Rohrflansche 26 und 27 an der Innenfläche des Abschlußdeckels 14 zustandekommt.

Das innere, erste Rohrelement 21 ragt mit geringem radialem und axialem Abstand bis zum Rohrboden 24 des äußeren, zweiten Rohrelementes 22. Bodenseitig ist im ersten Rohrelement 21 ein Rohrboden 34 vorgesehen, der bei Aufnahme eines Dämpfers eine radial etwas größere Bodenöffnung 35 als das Rohrelement 22 aufweist.

Innerhalb des ersten Rohrelementes 21 erstreckt sich nahezu über die gesamte axiale Länge eine erste Feder 11, die im Beispiel ebenfalls eine Wendelfeder ist.

Diese erste Feder 11 sitzt bodenseitig auf der Innenfläche des Rohrbodens 34 auf und liegt deckelseitig an einer Anschlagplatte 19 an. Die Anschlagplatte 19 weist im Schnitt eine etwa flache U-Form auf, wobei ihr Durchmesser kleiner als der Innendurchmesser des ersten Rohrelementes 21 gehalten ist. Die Anschlagplatte 19 weist einen nach unten, also in den inneren Freiraum der ersten Feder 11 vorspringenden Bereich auf, so daß durch die Anschlagplatte 19 gleichzeitig eine Führung und Stabilisierung des oberen Endes der ersten Feder 11 vorhanden ist.

Die von unten in die Vorrichtung 1 hineinragende Gewindestange 4 weist eine darauf aufgeschraubte Hülse 6 auf, die etwa bis zur Mitte der Längserstreckung der Vorrichtung 1 in diese hineinragt. In Richtung zum Abschlußdeckel 14 ist diese Hülse 6 auf eine obere Gewindestange 5 aufgeschraubt oder in anderer Weise damit fest verbunden. Die obere Gewindestange 5 weist im Axialschnitt am oberen Ende einen Mitnehmer 7 auf, der im Schnitt Rechteckform hat. Dieser Mitnehmer 7 ist durchmessermäßig so gestaltet, daß er die Hülse 6 radial überragt und somit eine flanschartig auskragende, untere Ringfläche 37 bildet. Andererseits ist der maximale Außendurchmesser des Mitnehmers 7 so gehalten, daß eine Axialbewegung innerhalb der ersten Feder 11 möglich ist.

Kraftschlüssig und gegebenenfalls starr ist zwischen der Anschlagplatte 19 und dem Mitnehmer 7 ein Meßwertaufnehmer 10 integriert, wie er aus der DE-3 119 806 A1 bekannt ist. Die Radialabmessung des Meßwertaufnehmers 10 liegt innerhalb des Innendurchmessers der ersten Feder 11, so daß bei einer am Seilende 3 in Pfeilrichtung einwirkenden Kraft F das Zwischenglied 9, der Meßwertaufnehmer 10 und die Anschlagplatte 19 axial nach unten relativ zur ersten Feder 11 bewegbar sind. Das Zwischenglied 9 wird dabei durch die untere und obere Gewindestange 4 und 5 sowie den Mitnehmer 7 gebildet.

Im linken Bereich der Schnittdarstellung ist eine ringartige Distanzbuchse 8 vorgesehen, die mit ihrem unteren Ende 39 auf der Innenfläche des Rohrbodens 24 des zweiten Rohrelementes 22 aufsteht. Das untere Ende 39 ragt daher durch die Bodenöffnung 35 des ersten Rohrelementes 21 hindurch. Im Hinblick auf die radialen Abmessungen der Distanzbuchse 8 erlauben diese eine Axialverschiebung der Hülse 6 relativ zur Distanzbuchse 8 ebenso wie ein Zusammenpressen der teilweise radial zwischen der Distanzbuchse 8 und der Innenmantelfläche des ersten Rohrelementes angeordneten ersten Feder 11.

Im rechten unteren Teil der Schnittdarstellung ist eine Variante 2 der Vorrichtung gezeigt. Bei dieser zweiten Variante entfällt die Distanzbuchse 8. Anstelle der Distanzbuchse 8 ist bei der zweiten Variante ein hülsenartiges Dämpfungselement 30 vorgesehen, das am unteren Ende durch die Bodenöffnung 35 des ersten Rohrelementes 21 hindurchragt und auf der Innenfläche des Rohrbodens 24 des zweiten Rohrelementes 22 aufsteht. Am oberen Ende des Dämpfungselementes 30 steht ein Innenring 31 mit dem Dämpfungselement 30 in Eingriff. In radialer Richtung weist dieser Innenring 31 etwa die Abmessungen des Dämpfungselementes 30 im unbelasteten Zustand, wie in der Zeichnung dargestellt, auf. Dieser Innenring 31 steht formschlüssig, z. B. über einen Stufenübergang, mit einem Außenring 32 in Verbindung. Die radiale Abmessung der miteinander in Eingriff stehenden Innen- und Außenringe 31 bzw. 32 ist so gehalten, daß eine relative Axialbewegung zwischen dem ersten Rohrelement 21 und der Hülse 6 möglich ist. In der Variante zwei der Vorrichtung 1 steht die erste Feder 11 daher nicht mit dem Rohrboden 34 des ersten Rohrelementes 21 in Verbindung, sondern die erste Feder 11 greift vorzugsweise in starrer Verbindung am Außenring 32 an.

Bei vorgesehenem Dämpfungselement wird daher bei einer Kraftbeaufschlagung in Richtung des Pfeiles zunächst eine Kontraktion des Dämpfungselementes 30 bewirkt. Abhängig von den charakteristischen Kenndaten des Dämpfungselementes 30 kann aufgrund des Eingriffes der Ringe 31 und 32 miteinander, die Axialbewegung der Feder 11 in Richtung zum Abschlußdeckel 14 nach einer entsprechenden Federkontraktion auch rascher erfolgen als die Nachführung bzw. das Nachfolgen des Dämpfungselementes 30. Als Dämpfungselement 30 kann z. B. ein Elastomerelement mit hoher Elastizität und Rückstellkraft oder andererseits mit hoher Verformungsenergieaufnahme verwendet werden. Denkbar sind auch andere Ausführungsformen, wie Ringfedern etc.

Die Rohrelemente 21 und 22 sind in Art zylindrischer Buchsen 23 aufgebaut. Die Integration bzw. Befestigung des Meßwertaufnehmers 10 ist im Beispiel über bolzenartige Elemente 17 und 18 mit der Anschlagplatte 19 bzw. dem Mitnehmer 7 realisiert.

Die Funktionsweise der ersten Variante der Vorrichtung kann wie folgt umrissen werden:

Nach Einschalten des Motors der Hebeeinrichtung werden die Massen des Triebwerkes zunächst auf Nenndrehzahl beschleunigt und das noch nicht durch die Last auf Zug beanspruchte Seil, also ein Schlaffseil, eingefahren, bis das Seil durch eine Last, z. B. ein am Boden aufliegendes Stückgut, belastet wird. Durch den Aufbau der Kraft F wird das Zwischenglied 9 einschließlich dem Meßwertaufnehmer 10 axial nach unten bewegt und die erste Feder 11 über einen entsprechenden Federweg nach unten zusammengedrückt. Die eingeleitete Bewegung und/ oder die einwirkende Kraft werden am Meßwertaufnehmer 10 erfaßt und in ein Signal für das Triebwerk der Hebeeinrichtung umgewandelt, so daß die Nenndrehzahl und damit die maximale Hubgeschwindigkeit auf einen einstellbaren Sollwert heruntergefahren werden kann, der einen kritischen Belastungszustand durch z. B. auftretende Schwingungen vermeidet. Beispielsweise kann ein derartiges Herunterfahren der Drehzahl in weniger als einer Sekunde, etwa in 200 bis 400 ms realisiert werden.

Der beim Anheben einer Last erforderliche Dehnungsweg, der bisher vom Seil oder von anderen Komponenten aufgefangen wurde, kann bei der Vorrichtung 1 weitestgehend zunächst von der ersten Feder 11 überbrückt werden, so daß kein nennenswerter Kraftanstieg im Seil, der aus einer zusätzlichen Dehnung resultiert, auftritt.

Bei einer unerwartet auftretenden Überlast kann durch den Meßwertaufnehmer 10 und die nachgeschaltete elektronische Auswerteinrichtung ein rasches Abschalten bzw. Herunterfahren des Triebwerkes in der Drehzahl bewirkt werden.

Die Vorrichtung 1 gemäß der Variante 1 weist dabei ein Funktionsprinzip auf, mit dem relativ große Kräfte mit einer "Übersetzung" gemessen werden können. Nach diesem Funktionsprinzip wird zunächst bei Einleitung einer Kraft F nur die innere, erste Feder 11 belastet, wobei diese auf die erste Feder 11 einwirkende Kraft "ohne" Übersetzung erfaßt wird. Durch die Krafteinwirkung werden der Meßwertaufnehmer 10 und die damit in Kraftflußwirkung stehenden Teile 19, 18, 7, 5, 6, 4 und 3 nach unten bewegt. Hierbei übernimmt die erste Feder 11 die eingeleitete Kraft F, bis die untere Ringfläche 37 gegen das obere Ende 38 der Distanzbuchse 8 zur Anlage kommt. Wünschenswert ist es, daß in der ersten Phase der Krafteinleitung ein möglichst großer Federweg, sozusagen als Vorlauffederweg, bereitgestellt wird. Dieser Vorlauffederweg kann dabei systemabhängig im wesentlichen durch die axiale Erstreckung der Distanzbuchse 8 festgelegt werden, da der Vorlauffederweg durch den axialen Abstand zwischen der unteren Ringfläche 37 und dem oberen Ende 38 der Distanzbuchse 8 bestimmt wird. Bedingt durch die relativ weiche, erste Feder 11 ist die bis zum Anschlag der unteren Ringfläche 37 gegen das obere Ende 38 der Distanzbuchse 8 aufgenommene Kraft sehr klein im Vergleich gegenüber der Nennbelastung. Diese Kraft kann systemabhängig z. B. ca. 10 % der eigentlich vorgesehenen Nennbelastung betragen.

Sobald die untere Ringfläche 37 und das obere Ende 38 der Distanzbuchs in Krafteingriff miteinander gelangen, wird die erste und die zweite Feder 11 und 12 an der Übertragung der einwirkenden Kraft mitbeteiligt. Die erste, innere Feder 11 und die zweite, äußere Feder 12, sind dabei so geschaltet, vorteilhafterweise parallel geschaltet, daß die zurückgelegten Federwege nach dem in Eingriffstehen der Flächen 37 und 38 für beide Federn gleich sind. Die weiterhin einwirkende Kraft teilt sich nunmehr nach dem in Eingriffstehen der beiden Flächen 37 und 38 auf die erste und zweite Feder entsprechend der jeweiligen Federsteifigkeit auf. Da das Verhältnis der Federsteifigkeit der zweiten Feder gegenüber der ersten Feder das Zehnfache oder noch höher sein kann, erfolgt in diesem Verhältnis die Aufteilung der eingeleiteten Kraft F. Der Meßwertaufnehmer 10 erfaßt dabei die auf die erste Feder 11 einwirkende Federkraft.

Da die Kraftschlußwirkung zwischen der unteren Ringfläche 37 und dem oberen Ende 38 der Distanzbuchse 8, z. B. schon bei ca. 10 % der Nennlast erfolgt, wird bei allen über etwa 10 % hinausgehenden Belastungszuständen die vorausgehend beschriebene Kraftübersetzung wirksam. Diese Kraftübersetzung ist dabei für die Kraftmessung durch den Meßwertaufnehmer 10 besonders vorteilhaft, da höhere eingeleitete Kräfte über beide Federn 11 und 12 aufgenommen werden, während die Messung der Kraft F über den Meßwertaufnehmer 10, der im Kraftfluß der ersten, inneren Feder 11, angeordnet ist. erfolgt.

Zur Aufnahme und Auswertung der vom Meßwertaufnehmer 10 ermittelten Krafteinwirkung, ist eine nicht dargestellte Meßleitung mit dem Meßwertaufnehmer verbunden. Diese Meßleitung ist zweckmäßigerweise möglichst axial in der Vorrichtung geführt, wobei z. B. eine Nutvertiefung oder eine entsprechende Bohrung im Mitnehmer 7 und ein entsprechender radialer Freiraum in der Bodenöffnung 25 vorgesehen sein können. In einer anderen Anschlußmöglichkeit kann diese Meßleitung auch nach oben z. B. durch die Anschlagplatte 19 und nachfolgend durch den Abschlußdeckel 14 geführt sein.

Bei der Variante 2 mit dem Dämpfungselement 30 sind beide Federn und das Dämpfungselement 30 sofort an der Kraftübertragung beteiligt. Legt sich der Ring 32 an den Rohrboden 34, wird jetzt die eingeleitete Kraft über die Ringfläche 37 und 31 über das Dämpferelement zur zweiten Feder weitergeleitet. Bei Entlastung erfolgt über die stufenförmige Ausbildung der Ringe 31 und 32 eine Mitnahme der ersten Feder in die dargestellte Ausgangsposition.

Abhängig vom Einsatzzweck der Vorrichtung kann insbesondere die zweite Feder 12 mit großer Federsteifigkeit so ausgelegt werden, daß in kritischen Betriebszuständen, wie z. B. einem "NOT-AUS", resultierende Energien, wie Schwingungsenergien etc., nahezu vollständig von der zweiten Feder aufgenommen werden können. Ergänzend oder auch alternativ zum Meßwertaufnehmer 10 können längs des Federweges sowohl der ersten Feder 11 wie auch der zweiten Feder 12 Meßfühler in Art von Schalterleisten vorgesehen sein, die bei der Überbrückung eines entsprechenden Federweges ein elektrisches Signal liefern können, das in funktioneller Abhängigkeit zum Belastungszustand steht.

Selbstverständlich können neben den beschriebenen Varianten 1 und 2 der Vorrichtung 1 auch Modifikationen realisiert werden. Bei einer entsprechenden Auslegung der ersten Feder 11 kann z. B. die zweite Feder 12 gänzlich entfallen. Dies kann auch dann der Fall sein, wenn z. B. im Einsatzbereich der Vorrichtung 1 ein Blockieren der Last ausgeschlossen werden kann. In anderen Ausführungsformen könnte z. B. auch das erste Rohrelement 21 entfallen, so daß die erste Feder 11 direkt am Rohrelement 22 abgestützt ist und damit eine direkte Kraftübertragung von der ersten Feder 11 auf die zweite Feder 12 ohne Federwegsblockierung vorhanden ist. Der Terminus Wendelfeder ist synonym mit dem Begriff der Schraubenfeder.

**Patentansprüche**

1. Vorrichtung für Hebeeinrichtungen zur Zwischenschaltung in den Kraftflußweg zwischen der Hebeeinrichtung bzw. deren Triebwerk und einer zu bewegenden Last, dadurch *gekennzeichnet* , daß zumindest eine Einrichtung (11, 12, 21, 22; 11, 12, 30, 31, 32) für den Abbau von Belastungsspitzen in der Hebeeinrichtung vorgesehen ist, die die durch den Lasthub und/oder die Lastbewegung hervorgerufene mechanische Energie zwischenspeichert und/oder zumindest teilweise in andere Energieformen umwandelt.

2. Vorrichtung nach Anspruch 1, dadurch *gekennzeichnet*, daß ein kraftschlüssig mit der Einrichtung (11, 12, 21, 22; 11, 12, 30, 31, 32) gekoppelter Meßwertaufnehmer (10) zur Ableitung eines Steuerungssignals für das Triebwerk der Hebeeinrichtung vorgesehen ist.

3. Vorrichtung nach Anspruch 1 oder 2, dadurch *gekennzeichnet*, daß die Einrichtung (11, 12, 21, 22; 11, 12, 22, 30, 31, 32) als Federeinrichtung ausgelegt ist, deren resultierende Federkennlinie in der Gesamtfunktion einen progressiven Verlauf aufweist und aus mindestens zwei Federkennlinien besteht, wobei die resultierende Federkennlinie insbesondere eine Unstetigkeitsstelle aufweisen kann, die eine Federwegsbegrenzung einer Feder (11, 12) der Federeinrichtung oder eine Federwegsbegrenzung zwischen den Federn markiert.

4. Vorrichtung nach den Anspruch 2 und 3, dadurch *gekennzeichnet*, daß der Meßwertaufnehmer (10) bezogen auf die Last kraftflußmäßig der Federeinrichtung (11, 21, 22, 12) vor- oder nachgeschaltet ist, insbesondere jedoch vorgeschaltet ist.

5. Vorrichtung nach Anspruch 3 oder 4, dadurch *gekennzeichnet*, daß die Federeinrichtung (11, 12, 21, 22) teleskopartig ausgelegt ist.

6. Vorrichtung nach Anspruch 5, dadurch *gekennzeichnet*, daß die teleskopartige Federeinrichtung (11, 12, 21, 22) mindestens eine erste, innere Feder (11) und eine mit der ersten Feder (11) kraftflußmäßig gekoppelte zweite Feder (12) aufweist, die die erste Feder (11) axial mindestens teilweise umgibt, und daß die erste Feder (11) eine flachere Federkennlinie als die zweite Feder (12) aufweist.

7. Vorrichtung nach Anspruch 6, dadurch *gekennzeichnet*, daß die zwei Federn (11, 12) so miteinander in Wirkverbindung angeordnet sind, daß die zweite Feder (12) erst nach Blockierung des Vorlauffederweges der ersten Feder (11) kraftflußmäßig beaufschlagbar ist.

8. Vorrichtung nach Anspruch 6 oder 7, dadurch *gekennzeichnet*, daß kraftflußmäßig in der Federeinrichtung (11, 12, 22), insbesondere zwischen der ersten Feder (11) und der zweiten Feder (12), eine Dämpfungseinrichtung (30, 31, 32) zur Nivellierung von auf die Vorrichtung (1) einwirkenden Stoßbelastungen vorgesehen ist.

9. Vorrichtung nach Anspruch 2 und einem der Ansprüch 3 oder 8, dadurch *gekennzeichnet*, daß der Meßwertaufnehmer (10) starr über ein Zwischenglied (9) mit der Last verbunden ist, und daß die Federeinrichtung (11, 12, 21, 22) durch lastmäßig einwirkende Kräfte druckbelastend beaufschlagbar ist.

10. Vorrichtung nach einem der Ansprüche 5 bis 9, dadurch *gekennzeichnet*, daß der Kraftfluß über mindestens ein starres Rohrelement (21, 22), das die innere, erste Feder (11) etwa radial ummantelt, von dieser auf die äußere zweite Feder (12) teilweise übertragbar ist.

11. Vorrichtung nach einem der Ansprüche 5 bis 10, dadurch *gekennzeichnet*, daß das Zwischenglied (9) in der inneren ersten Feder (11) axial bewegbar angeordnet ist und mit einer Verstelleinrichtung (4, 5, 6) zur Längeneinstellung eines daran befestigten Seiles oder Seilendes (3) ausgelegt ist.

12. Vorrichtung nach einem der Ansprüche 5 bis 11, dadurch *gekennzeichnet*, daß Meßfühler zur Erfassung des Belastungszustandes der Vorrichtung (1) im Federweg der ersten Feder (11) und/oder der zweiten Feder (12) vorgesehen sind.

**Claims**

1. Device for lifting apparatus for interposing in the force flux path between the lifting apparatus or its driving mechanism and a load to be moved, characterized in that at least one device (11, 12, 21, 22, 11, 12, 30, 31, 32) is provided for reducing loading peaks in the lifting apparatus, which intermediately stores the mechanical energy caused by the load travel and/or the load movement and/or at least partly converts it into other energy forms.

2. Device according to claim 1, characterized in that a transducer (10) non positively connected to the device (11, 12, 21, 22, 11, 12, 30, 31, 32) is provided for deriving a control signal for the driving mechanism of the lifting apparatus.

3. Device according to claims 1 or 2, characterized in that the device (11, 12, 21, 22, 11, 12, 22, 30, 31, 32) is constructed as a spring device, hose resultant spring characteristic has in the overall function a progressive configuration and comprises at least two spring characteristics and the resultant spring characteristic can in particular have a discontinuity, which marks a spring deflection limitation of one spring (11, 12) of the spring device or a spring deflection limitation between the springs.

4. Device according to one of the claims 2 and 3, characterized in that, based on the load, the transducer (10) is connected upstream or downstream and in particular upstream of the spring device (11, 21, 22, 12) with respect to the force flux.

5. Device according to claims 3 or 4, characterized in that the spring device (11, 12, 21, 22) has a telescopic construction.

6. Device according to claim 5, characterized in that the telescopic spring device (11, 12, 21, 22) has at least one first, inner spring (11) and a second spring (12) coupled from the force flux standpoint with the first spring (11) and at least partly axially surrounds the latter and that the first spring (11) has a flatter spring characteristic than the second spring (12).

7. Device according to claim 6, characterized in that the two springs (11, 12) are so functionally interconnected that the second spring (12) can only be subject to force flux after blocking the advance spring deflection of the first spring (11).

8. Device according to claims 6 or 7, characterized in that a damping mechanism (30, 31, 32) for levelling impact loads acting on the device (1) is provided from the force flux standpoint in spring device (11, 12, 22), particularly between the first spring (11) and the second spring (12).

9. Device according to claim 2 and one of the claims 3 to 8, characterized in that the transducer (10) is rigidly connected via an intermediate member (9) to the load and that the spring device (11, 12, 21, 22) can be compressively loaded by forces acting in a loading manner.

10. Device according to one of the claims 5 to 9, characterized in that by means of at least one rigid tubular element (21, 22), which roughly radially envelopes the inner, first spring (11) partly transfers the force flux from the latter to the outer, second spring (12).

11. Device according to one of the claims 5 to 10, characterized in that the intermediate member (9) is arranged in axially movable manner in the inner, first spring (11) and is constructed with an adjusting device (4, 5, 6) for adjusting the length of a cable or cable end (3) fixed thereto.

12. Device according to one of the claims 5 to 11, characterized in that sensors for determining the loading state of device (1) are provided in the spring deflection of the first spring (11) and/or the second spring (12).

**Revendications**

1. Dispositif pour appareils de levage destiné à être intercalé sur le parcours du flux de forces entre l'appareil de levage ou son mécanisme et une charge à déplacer, caractérisé par au moins un dispositif (11, 12, 21, 22 ; 11, 12, 30, 31, 32) pour la réduction des pointes de charge dans l'appareil de levage, qui emmagasine l'énergie mécanique produite par l'élévation de la charge et/ou le déplacement de la charge et/ou la transforme, au moins en partie, en d'autres formes d'énergie.

2. Dispositif selon la revendication 1, caractérisé par un capteur de valeurs mesurées (10) couplé à force avec le dispositif (11, 12, 21, 22 ; 11, 12, 30, 31, 32) pour la dérivation d'un signal de commande destiné au mécanisme de l'appareil de levage.

3. Dispositif selon l'une ou l'autre des revendications 1 ou 2, caractérisé en ce que le dispositif (11, 12, 21, 22 ; 11, 12, 22, 30, 31, 32) est conçu sous forme d'un mécanisme à ressorts dont la courbe caractéristique d'élasticité résultante présente dans la fonction d'ensemble une allure progressive et se compose d'au moins deux courbes caractéristiques d'élasticité, la courbe caractéristique d'élasticité résultante pouvant présenter notamment un endroit de discontinuité qui marque une limitation de course d'un ressort (11, 12) du mécanisme à ressorts ou une limitation de course entre les ressorts.

4. Dispositif selon les revendications 2 et 3, caractérisé en ce que le capteur de valeurs mesurées (10) est monté en amont ou en aval par rapport à la charge suivant le flux de forces du mécanisme à ressorts (11, 12, 22, 12), mais est notamment monté en amont.

5. Dispositif selon l'une ou l'autre des revendications 3 ou 4, caractérisé en ce que le mécanisme à ressorts (11, 12, 21, 22) est réalisé sous forme télescopique.

6. Dispositif selon la revendication 5, caractérisé en ce que le mécanisme à ressorts télescopique (11, 12, 21, 22) comprend au moins un premier ressort intérieur (11) et un deuxième ressort (12) couplé suivant le flux de forces avec le premier ressort (11), qui entoure axialement, au moins en partie, le premier ressort, et en ce que le premier ressort (11) présente une courbe caractéristique d'élasticité plus plate que celle du premier ressort.

7. Dispositif selon la revendication 6, caractérisé en ce que les deux ressorts (11, 12) sont disposés en liaison active entre eux, de telle sorte que le deuxième ressort (12) ne peut être atteint par le flux de forces qu'après blocage de la course d'avance du premier ressort.

8. Dispositif selon l'une ou l'autre des revendications 6 ou 7, caractérisé en ce qu'il est prévu suivant le flux de forces sur le mécanisme à ressort (11, 12, 22) en particulier entre le premier ressort (11) et le deuxième ressort (12) un dispositif d'amortissement (30, 31, 32) destiné au nivellement des charges par à coups agissant sur le dispositif (1).

9. Dispositif selon la revendication 2 et l'une quelconque des revendications 3 à 8, caractérisé en ce que le capteur de valeurs mesurées (10) est relié rigidement à la charge au moyen d'un élément intermédiaire (9) et en ce que le mécanisme à ressorts (11, 12, 21, 22) peut être sollicité par des forces agissant en fonction de la charge, en exerçant une charge de pression.

10. Dispositif selon l'une quelconque des revendications 5 à 9, caractérisé en ce que le flux de forces, par au moins un élément tubulaire rigide (21, 22) qui enveloppe le premier ressort (11) intérieur de manière sensiblement radiale, peut être transmis en partie, de celui-ci au deuxième ressort (12) extérieur.

11. Dispositif selon l'une quelconque des revendications 5 à 10, caractérisé en ce que l'élément intermédiaire (9) est disposé mobile axialement dans le premier ressort intérieur (11) et est conçu avec un dispositif de réglage (4, 5, 6) pour le réglage en longueur d'un câble ou d'une extrémité de câble (3) fixé à celui-ci.

12. Dispositif selon l'une quelconque des revendications 5 à 11, caractérisé en ce que des détecteurs de saisie de l'état de charge du dispositif (1) sont prévus sur la course du premier ressort (11) et/ou du deuxième ressort (12).